# EUROPÄISCHE PATENTSCHRIFT

(11) **EP 0 500 579 B1**
(45) Veröffentlichungstag und Bekanntmachung des Hinweises auf die Patenterteilung: **26.04.1995**
(21) Anmeldenummer: 90915756.2
(22) Anmeldetag: 24.10.1990
(51) Int. Cl.: H04N 7/087, H04N 7/084

(54) **FERNSEHÜBERTRAGUNGSVERFAHREN**
TV TRANSMISSION PROCESS
PROCEDE DE TRANSMISSION DE TELEVISION

(30) Priorität: 31.10.1989 DE 3936179
(43) Veröffentlichungstag der Anmeldung: 02.09.1992
(73) Patentinhaber: Deutsche Thomson-Brandt GmbH, 78003 Villingen-Schwenningen (DE)
(72) Erfinder: DIECKMÄNNKEN, Franz, D-3014 Laatzen 3 (DE); PLANTHOLT, Martin, D-6277 Bad Camberg 2 (DE); WESTERKAMP, Dietrich, D-3000 Hannover 1 (DE)
(74) Vertreter: Einsel, Robert, Dipl.-Ing.
(86) Internationale Anmeldenummer: EP9001798
(87) Internationale Veröffentlichungsnummer: WO9107054

(56) Entgegenhaltungen:
- DE-C- 3 843 423
- FR-A- 1 105 470
- US-A- 4 354 202
- US-A- 4 463 376
- FUNKSCHAU, Band 25, Nr. 18, August 1989, (München, DE), A. Ziemer et al.: "Die neuen Wege des alten Pal", Seiten 54,56-58

## Beschreibung

Die Erfindung betrifft ein Fernsehübertragungsverfahren nach dem Oberbegriff des Anspruchs.

Für die Einführung eines 16:9-Breitbildformates in bestehende Fernsehstandards (z. B. PAL, SECAM, NTSC) mit dem Format 4:3 wird das sogenannte Letterbox-Verfahren diskutiert. Bei diesem Verfahren wird in kompatibler Weise auf den 4:3-Empfänger die 16:9-Bildinformation mit schwarzen Streifen am oberen und unteren Bildrand dargestellt. Zur Anpassung der Geometrieverhältnisse auf dem kompatiblen 4:3-Empfänger bedarf es dazu einer vertikalen Transcodierung, die im sichtbaren Bildfenster auf dem 4:3-Empfänger nur 431 Zeilen darstellt. Die restlichen 144 aktiven Zeilen (575Z - 431Z = 144Z) erscheinen auf dem 4:3-Empfänger als schwarzer Streifen zu je 72 Zeilen am oberen und unteren Bildrand. Eine Beschreibung eines entsprechenden Verfahrens findet sich in "Verbesserungsmöglichkeiten und Entwicklungstendenzen bei PAL, G. Holoch, Vortrag FKTG 17.01.1989, Berlin".

Zur formatfüllenden Darstellung auf einem 16:9-Empfänger werden jedoch alle Informationen des 16:9-Quellsignales benötigt, d.h. ebenfalls die Informationen der 144 Zeilen, die im kompatiblen 4:3-Empfänger als schwarze Streifen erscheinen. Die Information der 144 Zeilen kann nach "Die neuen Wege des alten PAL", A. Ziemer, E. Matzel, Funkschau 18/1989 als Zusatzinformation im sog. Ultraschwarz-Bereich übertragen werden. Es wird dabei der Bereich zwischen Schwarzpegel und z.B. der halben Synchronimpulshöhe ausgenutzt. Somit ist das eingelagerte Zusatzsignal auf dem kompatiblen 4:3-Empfänger nicht sichtbar.

Andere Zusatzinformationen, die in gleicher Weise übertragen werden können, sind in der DE-A-3 930 964 beschrieben.

Für die Übertragung von Zusatzinformationen in der beschriebenen Form steht dann ein Amplitudenbereich von ca. 150 mV zur Verfügung siehe "Die neuen Wege des alten PAL", A. Ziemer, E. Matzel, Funkschau 18/1989. Weist die Zusatzinformation den vollen Videopegel von 700 mV auf, so ist eine Amplitudenabsenkung um ca. 13 dB erforderlich. Damit ergibt sich aber für einen verbesserten Empfänger, der die Zusatzinformation wieder auswertet, bei einer entsprechenden Signalanhebung eine Verschlechterung im Signal-Rauschabstand um ebenfalls ca. 13 dB.

Aus der DE-A-3 843 423 ist es bekannt, den Schwarzwert in den Zeilen der Letterbox-Streifen anzuheben, um die Zusatzinformationen im Ultraschwarzbereich mit größerer Amplitude zu übertragen. Aufgrund der Schwarzwert-Pegelsprünge an den Grenz-Zeilen zwischen den Letterbox-Streifen und dem aktiven Letterbox-Bildfenster oder der vertikalen Austastlücke kann es jedoch zu Synchronisationsstörungen oder zu Signalverfälschungen bei der Widergabe kommen.
Die Entgegenhaltung DE-A-3 843 423 ist im Oberbegriff gewürdigt. Diese Entgegenhaltung läßt offen, welche Zeilen in ihrem Schwarzwert angehoben werden. Ein Fachmann erhält auch keinen Hinweis, daß die Schwarzwerte zeilenweise unterschiedlich angehoben werden können.

Der Erfindung liegt die Aufgabe zugrunde, ein kompatibles Übertragungsverfahren anzugeben, welches Zusatzinformationen mit einem verbesserten Signal-Rauschabstand überträgt und Synchronisationsstörungen oder Signalverfälschungen bei der Widergabe vermeidet.

Diese Aufgabe wird bei einem Fernsehübertragungsverfahren nach dem Oberbegriff des einzigen Anspruches durch die im Kennzeichen angegebenen Merkmale gelöst.

Weiterbildungen und vorteilhafte Ausgestaltungen der Erfindung ergeben sich aus der weiteren Beschreibung und der Zeichnung.

Auf der Sendeseite wird in das zusammengesetzte Videosignal (FBAS) eine Abhebung des Schwarzwertes eingefügt. Dadurch wird der Bezugswert für die Klemmung und damit der Schwarzwert verschoben. Diese Maßnahme kann in einem ersten Fall für das gesamte Videosignal, d.h. für alle Zeilen, erfolgen. In einem zweiten Fall erfolgt die Schwarzwertabhebung nur während der schwarzen Streifen des im Letterbox-Format übertragenen Signales. Im Idealfall kann die Schwarzwertabhebung den gesamten Aussteuerbereich von 700 mV umfassen. Da bei kompatiblen Empfängern der Schwarzwert mittels Klemmschaltung über mehrere Zeilen gehalten wird, wird die Anhebung des Schwarzwertes für beide obengenannten Fälle von einem Maximalwert bis zu dem geringeren Schwarzwert der ersten Norm abnehmend durchgeführt, wobei der Maximalwert in der ersten und letzten Zeile des aktiven Bildfensters des Letterbox-Formats auftritt.

Nachfolgend wird die Erfindung anhand der Zeichnungen näher erläutert.
In der Zeichnung zeigen:
- Fig. 1: ein Standard-Farbsignal;
- Fig. 2: ein eingelagertes Signal im Ultraschwarzbereich ohne Schwarzwertabhebung;
- Fig. 3: ein eingelagertes Signal im Ultraschwarzbereich mit Schwarzwertabhebung.

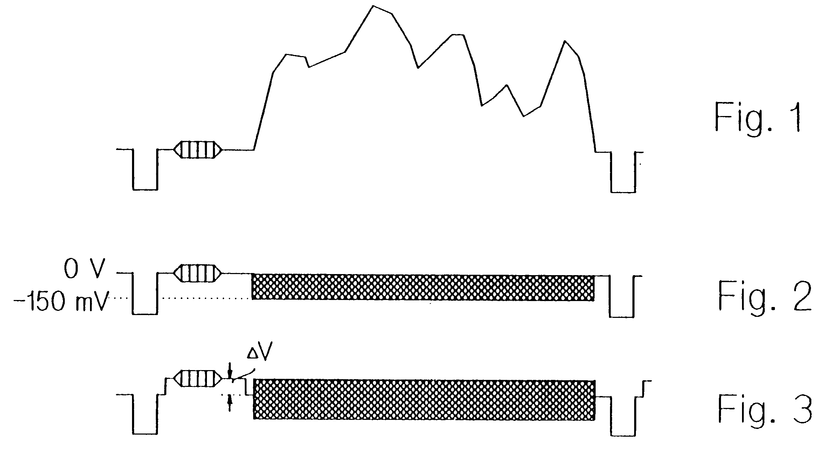

Fig. 1 zeigt ein Standard-Farbsignal mit Synchronimpuls, Farbburst, Schwarzschulter sowie Videosignal.

Fig. 2 zeigt ein eingelagertes Signal im Ultraschwarzbereich ohne Schwarzwertabhebung, wie es in "Die neuen Wege des alten PAL", A. Ziemer, E. Matzel, Funkschau 18/1989 beschrieben ist.

Fig. 3 zeigt ein eingelagertes Signal im Ultraschwarzbereich mit einer Schwarzwertabhebung, die erfindungsgemäß auch alle Zeilen des Videosignals umfassen kann.
Durch die erfindungsgemäße Lösung wird einerseits der ausnutzbare Amplitudenbereich für die Ultraschwarz-Modulation vergrößert und somit der Signal-Rauschabstand der übertragenen Zusatzinformation verbessert. Andererseits wird dadurch der Aussteuerbereich des eigentlichen Videosignals um denselben Betrag reduziert. Dies führt zu einem Rückgang in der Helligkeit des dargestellten Videosignals auf dem kompatiblen Empfänger. Eine Kompromißlösung von z.B. 100 mV Schwarzwertabhebung führt zu einem nicht wesentlichen Helligkeitsrückgang und einer Verbesserung im Signal-Rauschabstand der Zusatzinformation um ca. 4,4 dB (bezogen auf 700 mV Videopegel). Weiterhin wird hierdurch eine Annäherung der Signal-Rauschabstände von Haupt- und Zusatzsignal bewirkt. Der Unterschied der Signal-Rauschabstände beträgt bei 100 mV Schwarzwertabhebung 7,6 dB im Gegensatz zu 13,4 dB bei der Ultraschwarz-Modulation gemäß Fig. 2.

Darüberhinaus erlaubt die Maßnahme bei gleichem oder verbessertem Signal-Rauschabstand der Zusatzinformation eine verbesserte Synchronisation des kompatiblen Empfängers. Liegt der Aussteuerbereich der Zusatzinformation oberhalb der halben Synchronimpulshöhe, so werden mögliche Synchronisationsfehler der Synchronisationsschaltungen durch die Zusatzinformation weniger wahrscheinlich.

In einem zweiten Fall erfolgt die Schwarzwertabhebung nur während der schwarzen Streifen des im Letterbox-Format übertragenen Signales. Für das Hauptvideosignal (431 Zeilen) bleibt somit der volle Aussteuerbereich von 700 mV erhalten. Für die Unterbringung der Zusatzinformation in den verbleibenden schwarzen Zeilen kann dann die Schwarzwertabhebung größer gewählt werden, da das Hauptvideosignal nicht davon betroffen ist. Dadurch wird eine weitere Verbesserung im Signal-Rauschabstand für die eingelagerte Zusatzinformation erzielt, die größer ist als im ersten Fall. Durch die oben beschriebenen, gleitenden Übergänge zwischen den verschiedenen Schwarzwerten werden dann aber Störungen bei der Wiedergabe vermieden.

## Patentansprüche

1. Verfahren zur kompatiblen Übertragung eines Letterbox-Videosignals einer ersten Norm zum Empfang auf einem Empfänger der ersten Norm oder einem Empfänger einer zweiten Norm, mit einer im Videosignal der ersten Norm vorhandenen Zusatzinformation im Ultraschwarzbereich dieses Videosignales sowie einer Schwarzwertanhebung dieses Videosignals, dadurch gekennzeichnet, daß die Anhebung des Schwarzwertes für alle Zeilen des Videosignals der ersten Norm oder nur wie bekannt für die Zeilen in den Streifen des Letterbox-Formats durchgeführt wird, wobei für beide Alternativen die Anhebung des Schwarzwertes von einem Maximalwert bis zu dem geringeren Schwarzwert der ersten Norm abnehmend durchgeführt wird und der Maximalwert der Anhebung in der ersten und letzten Zeile des aktiven Bildfensters des Letterbox-Formats auftritt.

## Claims

1. Method of compatible broadcasting of a letterbox video signal of a first norm for reception on a receiver of the first norm or a receiver of a second norm with an additional information in the video signal of the first norm in the infrablack range of this video signal and an accentuation of the black value of this video signal characterized by the fact that the accentuation of the black value takes place for all lines of the video signal of the first norm or only as usual for the lines in the bands of the letterbox format, whereby for both alternatives the accentuation of the black value from a maximum value to the lower black value of the first norm is carried out decreasingly and the maximum value of the accentuation occurs in the first and last line of the active picture window of the letterbox format.

## Revendications

1. Procédé de diffusion compatible d'un signal vidéo "boîte aux lettres" d'une première norme pour la réception sur un récepteur de la première norme ou sur un récepteur d'une deuxième norme, avec une information additionnelle présente dans la plage ultranoire de ce vidéosignal de la première norme et avec un relèvement du niveau du noir de ce vidéosignal, caractérisé par le fait que le relèvement du niveau du noir est réalisé pour toutes les lignes du signal vidéo de la première norme ou seulement, comme il est connu, pour les lignes dans les bandes du format "boîte aux lettres", le relèvement du niveau du noir étant réalisé pour chaque alternative de manière décroissante depuis un niveau maximum jusqu'à un niveau du noir plus faible de la première norme et la valeur maximale du relèvement apparaissant dans la première et la dernière ligne de la fenêtre d'image active du format "boîte aux lettres".
